# EUROPEAN PATENT SPECIFICATION

(11) **EP 3 515 197 B1**
(45) Date of publication and mention of the grant of the patent: **17.03.2021**
(21) Application number: 17772818.5
(22) Date of filing: 14.09.2017
(51) Int. Cl.: A23D 7/005, A23D 9/007, A21D 13/16

(54) **OIL COMPOSITIONS WITH STARCH AND ETHYLCELLULOSE**
ÖLZUSAMMENSETZUNGEN MIT STÄRKE UND ETHYLCELLULOSE
COMPOSITIONS D'HUILE COMPRENANT DE L'AMIDON ET DE L'ÉTHYLCELLULOSE

(30) Priority: 23.09.2016 US 201662398573 P
(43) Date of publication of application: 31.07.2019
(73) Proprietor: Nutrition & Biosciences USA 1, LLC, Rochester, NY 14623 (US)
(72) Inventor: HILD, Alexandra, 29699 Bomlitz (DE); HUEBNER-KEESE, Britta, 29699 Bomlitz (DE); ADDEN, Anne, 29699 Bomlitz (DE); ERGUN, Roja, Midland MI 48674 (US)
(74) Representative: f & e patent
(86) International application number: PCT/US2017/051481
(87) International publication number: WO 2018/057381

(56) References cited:
- WO-A1-2011/143566
- WO-A1-2014/004018
- WO-A1-2014/172135
- US-A- 5 576 043
- US-A1- 2008 063 782
- TERRI A. STORTZ ET AL: "Edible oleogels in food products to help maximize health benefits and improve nutritional profiles", LIPID TECHNOLOGY, vol. 24, no. 7, 1 July 2012 (2012-07-01), pages 151-154, XP055418597, GB ISSN: 0956-666X, DOI: 10.1002/lite.201200205
- ALEJANDRO G. MARANGONI: "Organogels: An Alternative Edible Oil-Structuring Method", JOURNAL OF THE AMERICAN OIL CHEMISTS' SOCIETY, vol. 89, no. 5, 1 May 2012 (2012-05-01), pages 749-780, XP055090196, ISSN: 0003-021X, DOI: 10.1007/s11746-012-2049-3
- Isha Kaushik ET AL: "MOJ Food Processing & Technology Organogelation: It's Food Application Submit Manuscript |", , 17 April 2017 (2017-04-17), XP055372076, Retrieved from the Internet: URL:http://medcraveonline.com/MOJFPT/MOJFP T-04-00089.pdf [retrieved on 2017-05-11]
- XIE WEI-QI ET AL: "Quantitative analysis of total starch content in wheat flour by reaction headspace gas chromatography", ANALYTICAL AND BIOANALYTICAL CHEMISTRY, SPRINGER, DE, vol. 409, no. 22, 10 July 2017 (2017-07-10), pages 5195-5200, XP036296608, ISSN: 1618-2642, DOI: 10.1007/S00216-017-0494-4 [retrieved on 2017-07-10]

## Description

Fats that are solid at room temperature (23°C) have been used in various food products for many years. Most solid fats contain an undesirably high proportion of saturated fats and/or trans fats. It is thought that consumption of saturated fats and/or trans fats raises the level of blood LDL cholesterol and increase the risk of heart disease and stroke. Thus, it is desirable to replace the saturated fats and/or trans fats with unsaturated fats, which have various nutritional benefits. A common source of unsaturated fats is unsaturated oils such as vegetable oils, but these oils are typically liquid at room temperature or have melting points not far above room temperature. Simply replacing solid fat with liquid oil usually causes undesirable changes in the texture of the food product. It is desirable to replace the solid fat with a composition that is solid at room temperature and that contains a higher proportion of unsaturated oil to eliminate the negative health effects of saturated fats.

One approach to this problem has been the use of ethylcellulose oleogels, which are blends of unsaturated oil with a relatively small amount of ethylcellulose polymer. Ethylcellulose oleogels are solid at room temperature. In the course of developing the present invention it has been observed that many previously known ethylcellulose oleogels have one or more of the following drawbacks. A first drawback is that many previously known oleogels tend to separate when stored at room temperature; that is, oil tends to separate from the oleogel during storage. Such separation is undesirable. A second drawback to many previously known ethylcellulose oleogels is that the process to make the oleogel requires heating a mixture that contains ethylcellulose and oil to temperatures above 150°C. Such high temperature is undesirable because many oils undergo one or more undesirable chemical reactions at that temperature, which can cause development of unwanted color and/or unpleasant odor in the oil. A third drawback to many previously known ethylcellulose oleogels arises when the oleogel is present on the outside of a food item. When such a food item is heated to 105°C to 140°C, it is desired that the oleogel forms a solid coating on the outside of the food item to provide a moisture barrier. Many previously known oleogels required heating to 150°C in order to form a solid coating, and so such oleogels did not form a solid coating in the desired temperature range of 105°C to 140°C.

US 2012/0183663 describes a method of making an oleogel that involves a mixture of ethylcellulose and a surfactant. It is desired to provide a composition that is an oleogel and that avoids one or more of the drawbacks described above. WO2011/1434566 discloses structured phospholipid organogels comprising water soluble polymers. WO2014/172135 discloses roll-in compositions containing ethyl cellulose oleogels, flour, water and conventional fat components.

The following is a statement of the invention.

A first aspect of the present invention is an oil composition comprising, by weight based on the weight of the oil composition,
(a) 2 - 12% of one or more ethylcellulose polymers;
(b) 2 - 12% of an additive selected from the group consisting of one or more fatty acids, one or more monoglycerides of fatty acids, one or more diglycerides of fatty acids, and mixtures thereof;;
(c) 2 - 12% of one or more starch; and
(d) 64 - 94% of one or more oils, wherein the oil composition is an oleogel.

A second aspect not part of the present invention is a margarine-type composition comprising, by weight based on the weight of the margarine-type composition,
(a) 0.2% to 8% ethylcellulose polymer,
(b) 0.2% to 8% an additive selected from the group consisting of one or more fatty acids, one or more monoglycerides of fatty acids, one or more diglycerides of fatty acids, and mixtures thereof;,
(c) 0.2% to 8% starch,
(d) 20% to 90% unsaturated oil,
(e) 0% to 50% saturated fat, and
(f) 5% to 35% water.

A third aspect not part of the present invention is a puff pastry composition comprising, by weight based on the weight of the puff pastry composition,
(a) 0.2% to 2% ethylcellulose polymer,
(b) 0.25% to 3.5% an additive selected from the group consisting of one or more fatty acids, one or more monoglycerides of fatty acids, one or more diglycerides of fatty acids, and mixtures thereof;,
(c) 0.25% to 3.5% starch,
(d) 20% to 75% flour,
(e) 10% to 60% unsaturated oil, and
(f) 0% to 45% saturated fat.

The following is a detailed description of the invention.

As used herein, the following terms have the designated definitions, unless the context clearly indicates otherwise.

Cellulose is a polymer of D-glucose units, in which the units are linked by beta (1→4) glycosidic bonds. Cellulose has at least 300 D-glucose units. A representative structure for cellulose is as follows: 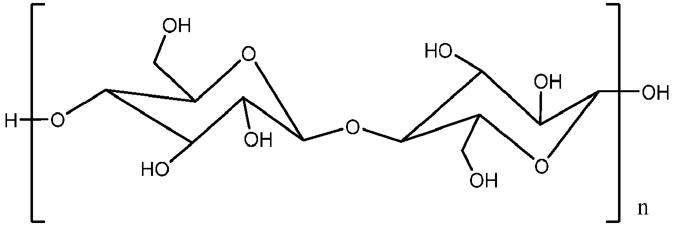 where n is an integer greater than or equal to 150. A given sample of cellulose may have a mixture of molecules with different values of n.

Ethylcellulose polymer, as used herein, means a derivative of cellulose in which some of the hydroxyl groups on the repeating glucose units are converted into ethyl ether groups. The number of ethyl ether groups can vary. The number of ethyl ether groups is characterized by the "percent ethoxyl substitution." The percent ethoxyl substitution is based on the weight of the substituted product and determined according to a Zeisel gas chromatographic technique as described in ASTM D4794-94 (2003). The ethoxyl substitution (also called "ethyl ether content") is from 10 to 55%.

As used herein, the viscosity of an ethylcellulose polymer is the viscosity of a 5 weight percent solution of that ethylcellulose polymer in a solvent, based on the weight of the solution. The solvent is a mixture of 80% toluene and 20% ethanol by weight. The viscosity of the solution is measured at 25°C in an Ubbelohde viscometer.

A "polymer," as used herein is a relatively large molecule made up of the reaction products of smaller chemical repeat units. Polymers have weight-average molecular weight of 2,000 daltons or higher.

The softening point of a material is the temperature below which the material behaves as a solid and above which it begins to be capable of flow under mild to moderate stress. Softening point is measured by the ring and ball method according to ASTM E28-14.

An ionic group is a chemical group, which may be a portion of a molecule, for which there is one or more value of pH between 4 and 12 at which, when plural ionic groups are in contact with water at that pH, 50 mole percent or more of the ionic groups will be in an ionized state.

A fatty group is a chemical group that contains only hydrogen and carbon and that contains 8 or more carbon atoms. The carbon atoms may be arranged in a line, in a branched formation, in a cycle, in a bi- or tri-cyclic formation, or a mixture thereof. A fatty acid has the composition R¹COOH, where R¹ is a fatty group. A monoglyceride of a fatty acid has either the structure HOCH₂-CH(OH)-CH₂(OR¹) or the structure HOCH₂-CH(OR¹)-CH₂(OH), where R¹ is a fatty group. A diglyceride of a fatty acid has either the structure HOCH₂-CH(OR²)-CH₂(OR¹) or the structure R²OCH₂-CH(OR¹)-CH₂(OH), where R¹ and R² are fatty groups; R¹ and R² may be identical to each other or may be different.

As used herein, an oil is a material that has melting point of 35°C or less and that has one or more carbon atom per molecule. An oil has no ionic group. An oil has no chemical group of the structure -(-CH₂CH₂-O-)ₙ- where n is 2 or more. One category of oils is triglycerides, which are triesters of fatty acids with glycerol. A fatty acid has the structure RCOOH, where R is a non-aromatic hydrocarbon group having 8 or more carbon atoms. Food oils are oils routinely consumed by human beings. Vegetable oils are triglycerides extracted from plants. As used herein, an "oil composition" is any composition that contains 50% or more oil by weight based on the weight of the composition. Depending on the type of oil or oils in the oil composition and on any other ingredients beside oil that may be in the oil composition, the oil composition may have any of a variety of physical structures at 23°C. For some examples, oil compositions at 23°C may be liquid or soft solid or oleogel or hard solid.

As used herein, starch is a polymer of D-glucose units that are linked by alpha (1→4) glycosidic bonds. Starch may be a linear polymer (amylose), a branched polymer (amylopectin), or a mixture thereof. Starch has a degree of polymerization of 200 or higher. A representative structure for starch is as follows: 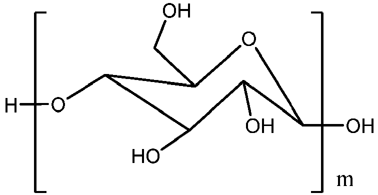 where m is an integer 200 or higher. A given sample of starch may have a mixture of molecules with different values of m.

As used herein, the term "oleogel" refers to a mixture that contains one or more oils and one or more ethylcellulose polymers; the oleogel is solid at 23°C. The oleogel may contain one or more additional ingredients such as starch, a fatty acid, a monoglyceride, a diglyceride, or a mixture thereof. The oleogel may be a relatively hard solid or a relatively soft solid. A cube of oleogel of height 2 cm, placed on a flat surface at 23°C, will resist collapsing under its own weight to the extent that the height after 1 minute will be 1 cm or higher.

As used herein, a surfactant is a molecule that includes both a hydrocarbon portion and a hydrophilic portion. The hydrocarbon portion contains 4 or more carbon atoms connected to each other in a formation that is linear, branched, cyclic, or a combination thereof. The hydrocarbon portion further contains one or more hydrogen atom. The hydrophilic portion would be soluble in water if it existed as a separate molecule, disconnected from the remainder of the surfactant molecule. Hydrophilic portions may be, for example, ionic groups or nonionic water-soluble groups such as, for example, EO groups, which have the structure -(CH₂CH₂-O-)ₙ- , where n is 1 or higher. A surfactant with one or more ionic groups is an ionic surfactant, and a surfactant with no ionic group is a nonionic surfactant.

Ratios are characterized herein as follows. For example, if a ratio is said to be 3:1 or greater, that ratio may be 3:1 or 5:1 or 100:1 but may not be 2:1. For another example, if a ratio is said to be 15:1 or less, that ratio may be 15:1 or 10:1 or 0.1:1 but may not be 20:1. In general terms, when a ratio is said herein to be X:1 or greater, it is meant that the ratio is Y: 1, where Y is greater than or equal to X. Similarly, when a ratio is said herein to be W:1 or less, it is meant that the ratio is Z:1, where Z is less than or equal to W.

Any ethylcellulose polymer may be used in the composition of the present invention. The ethoxyl substitution content of the ethylcellulose polymer is preferably 10% or more; more preferably 30% or more; more preferably 40% or more; preferably 45% or more; more preferably 48% or more. The ethoxyl substitution content of the ethylcellulose polymer is preferably 55% or less; more preferably 53% or less; more preferably 52% or less; more preferably 51% or less; more preferably 50% or less.

The ethylcellulose polymer preferably has viscosity of 2 mPa•s or higher; more preferably 5 mPa•s or higher; more preferably 12 mPa•s or higher; more preferably 16 mPa•s or higher. The ethylcellulose polymer preferably has viscosity of 5000 mPa•s or lower; more preferably 2000 mPa•s or lower; more preferably 1000 mPa•s or lower; more preferably 500 mPa•s or lower; more preferably 350 mPa•s or lower; more preferably 250 mPa•s or lower; more preferably 125 mPa•s or lower.

The ethylcellulose polymer has softening point of 100°C or higher; preferably 120°C or higher; more preferably 130°C or higher. The ethylcellulose polymer preferably has softening point of 160°C or lower; more preferably 150°C or lower; more preferably 140°C or lower.

Commercially available forms of ethylcellulose polymer which may be used in the invention include, for example, those available under the name ETHOCEL™, from The Dow Chemical Company, including, for example, ETHOCEL™ Standard 4, ETHOCEL™ Standard 7, ETHOCEL™ Standard 10, ETHOCEL™ Standard 20, ETHOCEL™ Standard 45, or ETHOCEL™ Standard 100 with ethoxyl substitution content from 48.0 to 49.5%. Other commercially available ethylcellulose polymers useful in embodiments of the invention include certain grades of AQUALON™ ETHYLCELLULOSE, available from Ashland, Inc., and certain grades of ASHACEL™ ethylcellulose polymers, available from Asha Cellulose Pvt. Ltd.

Preferably the amount of ethylcellulose polymer in the composition is, by weight based on the weight of the composition, 2% or more; more preferably 3% or more; more preferably 4% or more. Preferably the amount of ethylcellulose polymer in the composition is, by weight based on the weight of the composition, 12% or less; more preferably 10% or less; more preferably 8% or less.

The oil composition of the present invention contains oil. Preferred oils are food oils. Preferred food oils are vegetable oils. Preferred vegetable oils are cottonseed oil, peanut oil, coconut oil, linseed oil, palm kernel oil, rapeseed oil (also known as canola oil), omega-9 canola oil, palm oil, sunflower oil, olive oil, and mixtures thereof. Preferred vegetable oils are extracted from plant sources and have not been hydrogenated. Preferred oils are triglycerides.

Preferably the amount of oil in the oil composition is, by weight based on the weight of the oil composition, 64% or more; more preferably 70% or more; more preferably 75% or more. Preferably the amount of oil in the oil composition is, by weight based on the weight of the oil composition, 94% or less; more preferably 90% or less; more preferably 85% or less.

Preferably the amount of unsaturated oil in the oil composition is, by weight based on the weight of the oil composition, 50% or more; more preferably 60% or more; more preferably 70% or more. Preferably the amount of unsaturated oil in the oil composition is, by weight based on the weight of the oil composition, 94% or less; more preferably 90% or less; more preferably 80% or less.

The oil composition of the present invention optionally contains one or more saturated fat. In the oil composition of the present invention, when saturated fat is present, preferably the weight ratio of unsaturated oil to saturated fat is 30:1 or less; more preferably 25:1 or less; more preferably 20:1 or less. In the oil composition of the present invention, preferably the weight ratio of unsaturated oil to saturated fat is 6:1 or higher; more preferably 8:1 or higher; more preferably 10:1 or higher.

The oil composition contains an additive here called "additive (b)." The additive (b) is selected from one or more fatty acids, one or more monoglycerides of fatty acids, one or more diglycerides of fatty acids, and mixtures thereof. Among the fatty groups present in the additive (b), preferred are linear hydrocarbon groups; more preferred are unsaturated linear hydrocarbon groups. Preferred fatty groups have 10 or more carbon atoms; more preferred 12 or more carbon atoms; more preferred 14 or more carbon atoms; more preferred 16 or more carbon atoms. Preferred fatty groups have 20 or fewer carbon atoms.

Preferred additives (b) are one or more fatty acids, one or more monoglycerides of fatty acids, and mixtures thereof; more preferred are one or more fatty acids; more preferred is stearic acid.

Preferably, the amount of additive (b) in the oil composition is, by weight based on the weight of the oil composition is 2% or more; more preferably 4% or more; more preferably 6% or more. Preferably, the amount of additive (b) in the oil composition is, by weight based on the weight of the oil composition is 12% or less; more preferably 10% or less; more preferably 8% or less.

The oil composition contains starch. Suitable starches include starch isolated from one or more plants and starches that have been modified after isolation from one or more plants. Suitable modification methods include acid treatment, alkaline treatment, bleaching, oxidation, treatment with enzymes, reaction with phosphorous-containing compounds, acetylation, hydroxyalkylation, carboxymethylation, and combinations thereof. Preferred starch is isolated from one or more plants. Preferred plant sources of starch are rice, wheat, corn, potatoes, acorns, arrowroot, arracacha, bananas, barley, breadfruit, buckwheat, canna, colacasia, katakuri, kudzu, malanga, millet, oats, oca, polynesian arrowroot, sago, sorghum, sweet potatoes, rye, taro, chestnuts, water chestnuts, yams, beans, and mixtures thereof; more preferred are rice, wheat, corn, potatoes, and mixtures thereof; more preferred is corn.

Preferably, the amount of amylose in the starch is, by weight based on the weight of the starch, 10% or more; more preferably 15% or more; more preferably 20% or more. Preferably, the amount of amylose in the starch is, by weight based on the weight of the starch, 65% or less; more preferably 55% or less; more preferably 45% or less; more preferably 35% or less. Preferably, the amount of amylopectin plus amylose is, by weight based on the weight of the starch, 80% to 100%; more preferably 90% to 100%; more preferably 95% to 100%.

Preferably the amount of starch in the oil composition is, by weight based on the weight of the oil composition, is 2% or more; more preferably 4% or more; more preferably 6% or more. Preferably the amount of starch in the oil composition is, by weight based on the weight of the oil composition, is 12% or less; more preferably 10% or less; more preferably 8% or less.

The oil composition may be characterized by the amount of all surfactants other than the additive (b). Preferably, the amount of all surfactants other than the additive (b) is, by weight based on the weight of the oil composition, 0 to 5%; more preferably 0 to 2%; more preferably 0 to 1%; more preferably 0 to 0.5%; more preferably 0 to 0.2%; more preferably 0 to 0.1%. More preferably, the oil composition contains no surfactant other than additive (b).

The oil composition may be characterized by the amount of all compounds other than the additive (b), oil, starch, and ethylcellulose polymer. Preferably, the amount of all compounds other than the additive (b), oil, starch, and ethylcellulose polymer is, by weight based on the weight of the oil composition, 0 to 10%; more preferably 0 to 5%; more preferably 0 to 2%; more preferably 0 to 1%; more preferably 0 to 0.5%. More preferably, the oil composition contains no compound other than the additive (b), oil, starch, and ethylcellulose polymer.

The oil composition is an oleogel.

The firmness of an oleogel is assessed as follows. Oleogel, while at a temperature above the softening point of the ethylcellulose polymer, is poured into a shallow crystallizing dish of inner diameter 9.1 cm, to a depth of 2.5 cm. Approximately 24 hours after gel was made, the oleogel has cooled to room temperature (approximately 23°C). The dispensing end of a syringe having inner diameter of 2 mm is inserted into the center of the oleogel. A round compression probe is placed in the middle of the syringe. Firmness testing is performed at room temperature (23°C) in back extrusion mode using TA.XT plus texture analyzer from Stable Microsystems, using 13 mm immersion depth and cell force of 5 kg. Preferably, the oleogel has firmness of 0.5 N or more; more preferably 1 N or more; more preferably 2 N or more; more preferably 3.5 N or more. Preferably, the oleogel has firmness of 20 N or less; more preferably 15 N or less.

The oil composition may be made by any of a variety of processes. Preferably, oil, ethylcellulose polymer, additive (b), starch, and optional additional ingredients are brought together to form a mixture. Preferably the mixture is subjected to mechanical agitation. Mechanical agitation may be suitably applied by passing the mixture through an extruder, passing the mixture through a static mixer, by rotating one or more mechanical object within the mixture (such as a spinning propeller blade or the elements of a rotor stator mixer), or a combination thereof. Preferably the mixture is heated and agitated at the same time. Whatever method of mechanical agitation is used, preferably the mixture is heated to a maximum temperature T1 that is 80°C or higher; more preferably 110°C or higher. Preferably, temperature T1 is less than the softening point temperature (TSP) of the ethylcellulose polymer. Preferably, the difference DIFF = (TSP-T1) is 10°C or more; more preferably 20°C or more; more preferably 30°C or more.

Preferably, after heating to temperature T1, the mixture is allowed to cool to a temperature below 30°C. Preferably, during the cooling process, the mixture is not subjected to mechanical agitation.

It is contemplated that some embodiments of the present invention will show the benefit that the mixture produces an acceptable oleogel when cooled to below 30°C, even though the mixture was never heated as high as the softening point temperature of the ethylcellulose polymer.

Some suitable processes are batch processes, in which oil, ethylcellulose polymer, additive (b), starch, and optional additional ingredients are placed in a vessel, and the resulting mixture is heated and agitated, and then the entire mixture is removed from the vessel. Some other suitable processes are continuous. One suitable continuous process is extrusion, in which oil, ethylcellulose polymer, additive (b), and optional other ingredients are continuously fed to the inlet or inlets of an extruder, which heats, agitates, and transports the resulting mixture, which is continuously removed from the extruder at an outlet.

The oil composition of the present invention may be used for any purpose. One preferred use of the oil composition of the present invention is as an ingredient in a margarine-type composition. For example, a margarine-type composition that contains the oil composition of the present invention may substitute for margarine in situations where the margarine is used by itself, such as spreading the margarine on a substrate such as, for example, bread. For another example, a margarine-type composition that contains the oil composition of the present invention may substitute for margarine in situations where the margarine is mixed with other ingredients.

A margarine-type composition that contains the oil composition of the present invention (herein an "M1 composition") is solid at 23°C. Specifically, if a cube of the M1 composition of the present invention having 2.54 cm length per side is formed at 23°C, if the cube is allowed to rest on a horizontal surface at 23°C for 10 minutes, the height of the cube will remain at 2 cm or higher. Preferably the firmness of the M1 composition of the present invention is 6 N or higher. Preferably, the firmness of the M1 composition of the present invention is 35 N or lower.

In an M1 composition of the present invention, preferably the amount of ethylcellulose polymer, by weight based on the weight of the M1 composition is 0.2% or more; more preferably 0.5% or more; more preferably 1% or more. In an M1 composition of the present invention, preferably the amount of ethylcellulose polymer, by weight based on the weight of the M1 composition is 8% or less; more preferably 5% or less; more preferably 3% or less.

In an M1 composition of the present invention, preferably the amount of additive (b), by weight based on the weight of the M1 composition is 0.2% or more; more preferably 0.5% or more; more preferably 1% or more. In an M1 composition of the present invention, preferably the amount of additive (b), by weight based on the weight of the M1 composition is 8% or less; more preferably 5% or less; more preferably 3% or less.

In an M1 composition of the present invention, preferably the amount of starch, by weight based on the weight of the M1 composition is 0.2% or more; more preferably 0.5% or more; more preferably 1% or more. In an M1 composition of the present invention, preferably the amount of starch, by weight based on the weight of the M1 composition is 8% or less; more preferably 5% or less; more preferably 3% or less.

In an M1 composition of the present invention, preferably the amount of unsaturated oil, by weight based on the weight of the M1 composition is 20% or more; more preferably 30% or more; more preferably 40% or more. In an M1 composition of the present invention, preferably the amount of unsaturated oil, by weight based on the weight of the M1 composition is 90% or less; more preferably 80% or less.

The M1 composition of the present invention optionally contains one or more saturated fats. In an M1 composition of the present invention, in some embodiments the amount of saturated fat, by weight based on the weight of the M1 composition is 0% or more; or 10% or more; or 20% or more. In an M1 composition of the present invention, preferably the amount of saturated fat, by weight based on the weight of the M1 composition is 50% or less; more preferably 40% or less; more preferably 30% or less.

In an M1 composition of the present invention, preferably the amount of water, by weight based on the weight of the M1 composition is 5% or more; more preferably 10% or more. In an M1 composition of the present invention, preferably the amount of water, by weight based on the weight of the M1 composition is 35% or less; more preferably 25% or less.

Other ingredients that are optionally present in an M1 composition of the present invention are lecithin, monoglycerides, diglycerides, nonfat dry milk, sodium chloride, potassium sorbate, sodium benzoate, and mixtures thereof.

In the M1 composition of the present invention, preferably the weight ratio of unsaturated oil to saturated fat is 5:1 or less; more preferably 4:1 or less; more preferably 3:1 or less. In the M1 composition of the present invention, preferably the weight ratio of unsaturated oil to saturated fat is 0.5:1 or higher; more preferably 1:1 or higher; more preferably 1.5:1 or higher.

One preferred use for M1 composition of the present invention is to incorporate the M1 composition of the present invention into a pastry composition. A pastry composition is a composition that contains flour and that also contains butter, margarine, shortening, a composition of the present invention, or a mixture thereof. Preferred flours are made from corn, rice, wheat, barley, sorghum, millet, oats, rye, triticale, buckwheat, fonio, quinoa, and combinations thereof; more preferred is wheat.

Dough contains flour, water, and optionally other ingredients. Preferably the sum of the amounts of flour and water, by weight based on the weight of the dough, is 80% or more; more preferably 85% or more; more preferably 90% or more. Dough preferably contains saturated fat or unsaturated oil or a combination thereof. Preferably sum of the amount of unsaturated oil and the amount of saturated fat is, by weight based on the weight of the dough, 15% or less; more preferably 10% or less.

Preferred dough contains wheat flour. Preferably the amount of flour in dough is, by weight based on the weight of the dough, 25% or more; more preferably 40% or more. Preferably the amount of flour in dough is, by weight based on the weight of the dough, 75% or less; more preferably 65% or less. Preferably the amount of water in dough is, by weight based on the weight of the dough, 10% or more; more preferably 20% or more; more preferably 30% or more. Preferably the amount of water in dough is, by weight based on the weight of the dough, 55% or less; more preferably 45% or less. Preferably the amount of water plus the amount of flour in the dough is, by weight based on the weight of the dough, 75% or more; more preferably 85% or more. Preferably the amount of water plus the amount of flour in the dough is, by weight based on the weight of the dough, 98% or less; more preferably 96% or less. Preferred ingredients in dough other than flour and water are one or more of butter, margarine, the composition of the present invention, sodium chloride, and mixtures thereof.

A preferred type of pastry composition that contains the oil composition of the present invention is puff pastry. Puff pastry is a pastry composition that is made by a process that contains the following steps. A structure (i) is formed that contains layers. Each layer is planar; that is, each layer is flat and has one dimension that is smaller than each of the other two dimensions by a factor of 5 or more. The layers are parallel to each other. The small dimension defines the "vertical" direction, and the layers are referred to as "horizontal" regardless of their orientation with respect to gravity. Structure (i) contains a top layer that contains dough; an intermediate layer that contains butter, margarine, shortening, the composition of the present invention, or a mixture thereof (preferably containing a composition of the present invention); and a bottom layer that contains dough. Then structure (i) is subjected to a force in the vertical direction that compresses structure (i) to form compressed structure (ii). The force may be applied mechanically by any method. For example, the bottom layer of structure (i) may rest against a flat surface and then a roller or a flat plate or other object may be pushed against the top layer of structure (i). Then structure (ii) is preferably folded one or more times to form a structure (iii) that has two or more horizontal layers, where each of the horizontal layers of structure (iii) contains a portion of structure (ii). Preferably structure (iii) is then compressed to form a compressed structure (iv). Preferably, the sequence of folding and compressing is repeated one or more additional times. Preferably, the pastry composition is then baked in an oven. Preferably, the temperature of the oven during baking is 125°C or higher; more preferably 150°C or higher; more preferably 175°C or higher. Preferably, the temperature of the oven during baking is 250°C or lower; more preferably 225°C or lower; more preferably 210°C or lower. Preferably, the baking time in the oven is 5 minutes or longer; more preferably 10 minutes or longer. Preferably, the baking time in the oven is 30 minutes or less; more preferably 25 minutes or less; more preferably 20 minutes or less.

Among pastry compositions, preferred are those that contain, after baking, ethylcellulose polymer in an amount, by weight based on the pastry composition after baking, 0.2% or more; more preferably 0.4% or more; more preferably 0.6% or more. Among pastry compositions, preferred are those that contain, after baking, ethylcellulose polymer in an amount, by weight based on the pastry composition after baking, 2% or less; more preferably 3% or less; more preferably 2% or less; more preferably 1% or less.

Among pastry compositions, preferred are those that contain, after baking, the additive (b) in an amount, by weight based on the pastry composition after baking, 0.25% or more; more preferably 0.5% or more; more preferably 0.75% or more; more preferably 1% or more. Among pastry compositions, preferred are those that contain, after baking, the additive (b) in an amount, by weight based on the pastry composition after baking, 3.5% or less; more preferably 2.5% or less; more preferably 1.5% or less.

Among pastry compositions, preferred are those that contain, after baking, starch that was introduced into the pastry composition as part of the oil composition of the present invention in an amount, by weight based on the pastry composition after baking, 0.25% or more; more preferably 0.5% or more; more preferably 0.75% or more; more preferably 1% or more. Among pastry compositions, preferred are those that contain, after baking, starch that was introduced into the pastry composition as part of the oil composition of the present invention in an amount, by weight based on the pastry composition after baking, 3.5% or less; more preferably 2.5% or less; more preferably 1.5% or less.

Among pastry compositions, preferred are those that contain, after baking, flour in an amount, by weight based on the pastry composition after baking, 20% or more; more preferably 30% or more; more preferably 40% or more. Among pastry compositions, preferred are those that contain, after baking, flour in an amount, by weight based on the pastry composition after baking, 75% or less; more preferably 65% or less; more preferably 55% or less.

Among pastry compositions, preferred are those that contain, after baking, water in an amount, by weight based on the pastry composition after baking, 0 to 10%; more preferably 0 to 5%.

Among pastry compositions, preferred are those that contain, after baking, saturated fat in an amount, by weight based on the pastry composition after baking, 3.5% or more; more preferably 8% or more; more preferably 12% or more. Among pastry compositions, preferred are those that contain, after baking, saturated fat in an amount, by weight based on the pastry composition after baking, 45% or less; more preferably 35% or less; more preferably 25% or less.

Among pastry compositions, preferred are those that contain, after baking, unsaturated oil in an amount, by weight based on the pastry composition after baking, 10% or more; more preferably 15% or more; more preferably 20% or more. Among pastry compositions, preferred are those that contain, after baking, unsaturated oil in an amount, by weight based on the pastry composition after baking, 60% or less; more preferably 50% or less; more preferably 40% or less.

Among pastry compositions, preferred are those that contain, after baking, the sum of the amounts of flour, saturated fat, and unsaturated oil, by weight based on the pastry composition after baking, 80% or more; more preferably 85% or more; more preferably 90% or more.

The following are examples of the present invention.

The following materials were used:
EC-1 = Ethocel™ Std 45 ethylcellulose polymer from the Dow Chemical Company; has ethoxyl content of 48.0-49.5% and viscosity of 41-49 mPa^{∗}s. Premium grade, suitable for use in food, was used.
Stearic Acid = from Sigma Aldrich, purity greater than 95% by weight, kosher grade.
ST-1 = pure corn starch, RUF feine Speisestärke, from RUF Lebensmittelverk KG, Quakenbrück, Germany.
Oil-1 = Sunflower oil
Oil-2 = omega-9 canola oil
NFDM = nonfat dry milk
glycerides = mixture of mono- and diglycerides
HEMC = Walocel™ MW 40000, from the Dow Chemical Company; has viscosity (2% by weight solution in water, Haake Rotovisko RV 100 rheometer, shear rate 2.55 s-1, 20°C) of 35 to 45 Pa^{∗}s.
margarine hardstock = by weight, 80% saturated fat, 17% monounsaturated fat, 3% polyunsaturated oil, obtained from Loders Croklaan.

### Example 1: Comparative Mixtures 1-1C and 1-2C; Inventive Mixtures 1-3 and 1-4

Mixtures were made as follows. EC-1, additive (b), and ST-1 (if present) were blended to form a premix. The reaction vessel was put on a scale and a defined quantity of oil (e.g. 200g) was weighed. The vessel was fixed with the screw, so that the position of the stirrer was about 5mm from the bottom. The temperature sensor was positioned 10mm above the stirrer, near the vessel wall. A defined quantity of blend premix was weighed on a metal sheet. At a stirring speed of 400 RPM, the premix was added slowly into the vessel.

Immediately after the start, the nitrogen tube was fixed. Immersion of the nitrogen tube in the oil during the reaction was prevented. A slow nitrogen stream was adjusted to stream over the oil surface. The cover was put on the vessel and the mixture was stirred for 10 minutes under these conditions.

The oil was heated to an internal temperature of 110°C within 25 minutes using the same stirring speed. After reaching 110°C, it was stirred for additional 40 to 120 minutes at 110°C. The mixture was transferred rapidly from the vessel into a preheated geometry (100°C) and cooled down slowly to room temperature (approximately 23°C) in a drying cabinet.

After the mixture reached room temperature (approximately 23°C), the firmness was tested as follows. The dispensing end of a syringe having inner diameter of 2 mm was inserted into the center of the sample. A round compression probe was placed in the middle of the syringe. Firmness testing was performed at room temperature (23°C) in back extrusion mode using TA.XT plus texture analyzer from Stable Microsystems, using 13 mm immersion depth and cell force of 5 kg. Firmness is reported in Newtons (N).

The mixtures and their firmness results were as follows:

| Example No. | EC-1 (pbw) | Stearic Acid (pbw) | St-1 (pbw) | Oil-1 (pbw) | Firmness (N) |
|---|---|---|---|---|---|
| 1-1C | 5 | 7 | 0 | 88 | 2.2 |
| 1-2C | 7 | 7 | 0 | 86 | 3.1 |
| 1-3 | 5 | 7 | 7 | 81 | 4.6 |
| 1-4 | 7 | 7 | 7 | 79 | 7.1 |

The samples that contained starch in addition to ethylcellulose polymer and stearic acid showed improved firmness.

### Preparative Example 2: fat phase

A fat phase was made by combining the following ingredients:

| ingredient | weight % of fat phase |
|---|---|
| margarine hardstock | 99.3 |
| lecithin | 0.2 |
| mixture of mono- and diglycerides | 0.5 |

### Preparative Example 3: water phase

A water phase was made by combining the following ingredients:

| ingredient | weight % of water phase |
|---|---|
| NFDM | 5 |
| sodium chloride | 10 |
| potassium sorbate | 0.5 |
| sodium benzoate | 0.5 |
| water | 84 |

### Example 4C and 5: margarine-style compositions

A comparative margarine (Ex. 4C) and inventive example margarine-style composition (Ex. 5) were made, using an Armfield scrape surface heat exchanger. Ingredients were as follows. The amounts shown are parts by weight.

| ingredient | Comparative Ex. 4C | Example 5 |
|---|---|---|
| Oleogel (Example 1-3) | 0.00 | 5.76 |
| Oil-2 | 4.48 | 4.48 |
| fat phase (Preparative Example 2) | 11.52 | 5.76 |
| water phase (Preparative Example 3) | 4.00 | 4.00 |
| total | 20.00 | 20.00 |

### Preparative Example 6: dough

Dough was made by mixing the following ingredients, in % by weight. The bread flour and cake flour are both wheat flours.

| | |
|---|---|
| bread flour | 44.91 % |
| cake flour | 10.36% |
| butter | 6.89% |
| water | 36.56% |
| salt | 1.28% |

### Example 7C and 8: puff pastry

Puff pastry was made as follows. The "roll-in" was either margarine (comparative example 4C) or inventive margarine-type composition (Example 5). Puff pastry was prepared as follows.

Countertop was floured and then the roll-in samples were rolled into a square shape with the thickness of 0.952 cm to 1.27 cm (0.375 to 0.5 inch) with a rolling pin. The samples then were placed in the refrigerator (aproximately 2°C) for 30 minutes to firm up. Ratio of dough to roll-in was as follows: (60:40) 600 g dough/400 g roll-in.

The dough was rolled to form a flat a rectangle with a thickness of 10-13 mm dough layer. The roll-in composition was placed on one half of the dough with just enough of the dough showing around the roll-in composition edged to pinch when folded. The second half of dough was folded over the roll-in composition and the edges of the dough were pinched (sealed) around the roll-in composition to form a sandwiched article. The resulting sandwiched article was rolled to a thickness of 10-13 mm while maintaining a rectangular shape. The left and right sides were folded in to meet at the center. The sides were folded on top of one another along the center line as if closing a book. The resulting composition was refrigerated at approximately 4°C for 30 minutes. The composition was turned 90 degrees and rolled into a rectangle 10-13 mm thick. The halves were folded to the center and then on top of one another as before and refrigerated for 30 minutes. This process of folding, refrigerating and rolling out was repeated for three times.

After the third roll out and fold over, the dough samples were placed in the refrigerator for about 30 minutes. After that, the samples were taken out of the refrigerator, rolled out for the last time and then cut into 10 cm by 12 cm rectangles. The cut dough pieces placed on a baking tray and rested in the refrigerator at approximately 4°C for about 30 minutes. After resting period at approximately 23°C, the pieces were baked in a convection oven at 190°C (375 °F) for 16 minutes.

After baking, the pastries had the following overall composition, in weight % based on the weight of the pastry after baking:

| | Roll-in Composition | |
|---|---|---|
| | Comparative 4C | Example 5-80 |
| water | 0 | 0 |
| flour | 46.48 | 46.48 |
| saturated fat | 31.45 | 20.42 |
| salt | 2.20 | 2.20 |
| unsaturated oil | 18.97 | 27.05 |
| lecithin | 0.06 | 0.03 |
| mono- and diglycerides | 0.16 | 0.08 |
| NFDM | 0.56 | 0.56 |
| potassium sorbate | 0.06 | 0.06 |
| sodium benzoate | 0.06 | 0.06 |
| EC-1 | 0 | 0.81 |
| stearic acid | 0 | 1.13 |
| St-1 | 0 | 1.13 |

The puff pastry made using Example 5 appeared identical to the puff pastry made using Comparative Example 4C. This result demonstrates that the inventive composition yields a pastry that has a reduction of saturated fat of 35% over the comparative pastry while achieving equivalent pastry quality.

### Example 9: production of croissants

First, three different oleogels were made:

| | |
|---|---|
| OG-9-2C: | Comparative: 7% by weight EC-1, 93% by weight Oil-1 |
| OG-9-3: | 5% by weight EC-1, 81% by weight Oil-1, 7% by weight stearic acid, 7% by weight ST-1 |
| OG-9-4: | 7% by weight EC-1, 79% by weight Oil-1, 7% by weight stearic acid, 7% by weight ST-1 |

Croissants were made using four different roll-in compositions, as follows:

| Roll-In Label | Laminating Margarine | OG-9-2C | OG-9-3 | OG-9-4 | Bread Flour |
|---|---|---|---|---|---|
| RI-9-1C | 275 g | 0 | 0 | 0 | 0 |
| RI-9-2C | 125 g | 125 g | 0 | 0 | 25 g |
| RI-9-2 | 125 g | 0 | 125 g | 0 | 25 g |
| RI-9-3 | 125 g | 0 | 0 | 125 g | 25 g |

Each of RI-9-2C, RI-9-3, and RI-9-4 was made by blending the ingredients shown as follows. The laminating margarine was removed from a refrigerator and warmed in an oven to 30-40°C, then placed into an oven at 50°C for 30 minutes. Oleogel and bread flour were whipped in a mechanical mixer for 60 seconds at room temperature (approximately 23°C), an the resulting mixture was placed in a covered container in a refrigerator at approximately 4°C for 16 to 24 hours.

An egg wash was prepared by mixing one whole egg with water (three times the volume of the egg) and a pinch of salt.

Croissants were made using the following ingredients:

| | |
|---|---|
| 500 g | flour blend (Crossata™ premixed dough) |
| 17.5 g | yeast |
| 250 g | water (from refrigerator, approximately 4°C) |
| 250 g | Roll-in |
| 25 g | bread flour |

Flour blend, yeast, water, and bread flour were kneaded together in a mechanical kneader for 4 minutes. The kneaded dough reached 20-22°C. The dough was formed into a flat rectangle and then placed in a refrigerator (4°C) for 10 minutes.

Then the rolling procedure was performed three times: The roll-in was placed into the middle of the rectangle. The rectangle was folded from two sides towards the middle. Then the dough was rolled out and the rectangle was placed in a refrigerator (4°C) for 10 minutes. After the three rolling procedures, the dough was finally rolled out to a rectangle 15 cm wide X 18 cm long, with thickness of 2.5 mm.

The rectangle was cut along a diagonal to form two triangular pieces, each of which was rolled into a croissant shape. The croissants were proofed at 30°C, 80% relative humidity until they achieved 75% of their final height. The croissants were coated with the egg wash. The croissants were then baked for 8 min. at 165°C, 100% relative humidity, then 8 min. at 175°C, 50% relative humidity.

The croissants were evaluated visually for appearance, texture, and baking behavior. The inventive croissants (those made with RI-9-3 and RI-9-4) were as good as or better than the comparative croissants (those made with laminating margarine and RI-9-2C). The inventive croissants had far lower saturated fat than the croissants made with margarine.

## Claims

1. An oil composition comprising, by weight based on the weight of the oil composition,
(a) 2 - 12% of one or more ethylcellulose polymers;
(b) 2 - 12% of an additive selected from the group consisting of one or more fatty acids, one or more monoglycerides of fatty acids, one or more diglycerides of fatty acids, and mixtures thereof;
(c) 2 - 12% of one or more starch; and
(d) 64 - 94% of one or more oils,
wherein the oil composition is an oleogel.

2. The composition of claim 1, wherein the composition comprises unsaturated oil and saturated fat, with a weight ratio of the unsaturated oil to the saturated fat of 6:1 or greater.

3. The composition of claim 1, wherein the starch comprises corn starch.

4. The composition of claim 1, wherein the additive is selected from the group consisting of one or more fatty acids, one or more monoglyceride of a fatty acid, and mixtures thereof.

5. The composition of claim 1, wherein the additive comprises stearic acid.

## Patentansprüche

1. Ölzusammensetzung umfassend, gewichtsmäßig auf das Gewicht der Ölzusammensetzung bezogen,
(a) 2 -12 % eines oder mehrerer Ethylcellulosepolymere;
(b) 2 - 12 % eines Zusatzmittels ausgewählt aus der Gruppe bestehend aus einer oder mehreren Fettsäuren, einem oder mehreren Monoglyceriden von Fettsäuren, einem oder mehreren Diglyceriden von Fettsäuren und Mischungen davon;
(c) 2-12 einer oder mehrerer Stärken; und
(d) 64 - 94 % eines oder mehrerer Öle,
wobei die Ölzusammensetzung ein Oleogel ist.

2. Zusammensetzung nach Anspruch 1, wobei die Zusammensetzung ungesättigtes Öl und gesättigtes Fett mit einem Gewichtsverhältnis des ungesättigten Öls zu dem gesättigten Fett von 6:1 oder mehr umfasst.

3. Zusammensetzung nach Anspruch 1, wobei die Stärke Maisstärke umfasst.

4. Zusammensetzung nach Anspruch 1, wobei das Zusatzmittel aus der Gruppe ausgewählt ist bestehend aus einer oder mehreren Fettsäuren, einem oder mehreren Monoglyceriden einer Fettsäure und Mischungen davon.

5. Zusammensetzung nach Anspruch 1, wobei das Zusatzmittel Stearinsäure umfasst.

## Revendications

1. Composition d'huile comprenant, en poids sur la base du poids de la composition d'huile,
(a) 2 - 12% d'un ou de plusieurs polymères d'éthylcellulose;
(b) 2 - 12% d'un additif choisi dans le groupe constitué de: un ou plusieurs acides gras, un ou plusieurs monoglycérides d'acides gras, un ou plusieurs diglycérides d'acides gras et des mélanges de ceux-ci;
(c) 2 - 12% d'un ou de plusieurs amidons; et
(d) 64 - 94% d'une ou de plusieurs huiles,
dans laquelle la composition d'huile est un gel huileux.

2. Composition selon la revendication 1, dans laquelle la composition comprend une huile insaturée et une graisse saturée, avec un rapport en poids de l'huile insaturée sur la graisse saturée de 6:1 ou plus.

3. Composition selon la revendication 1, dans laquelle l'amidon comprend un amidon de maïs.

4. Composition selon la revendication 1, dans laquelle l'additif est choisi dans le groupe constitué de: un ou plusieurs acides gras, un ou plusieurs monoglycérides d'un acide gras et des mélanges de ceux-ci.

5. Composition selon la revendication 1, dans laquelle l'additif comprend de l'acide stéarique.
